Europäisches Patentamt

European Patent Office

Office européen des brevets

(19)

(11) Veröffentlichungsnummer: **0 023 029**
**B1**

(12) **EUROPÄISCHE PATENTSCHRIFT**

(45) Veröffentlichungstag der Patentschrift: **19.12.84**

(21) Anmeldenummer: **80104165.8**

(22) Anmeldetag: **16.07.80**

(51) Int. Cl.³: **G 01 W 1/14**

(54) Gerät zur Messung der Verdunstung und/oder des Niederschlags.

(30) Priorität: **21.07.79 HU KA001532**

(43) Veröffentlichungstag der Anmeldung:
**28.01.81 Patentblatt 81/04**

(45) Bekanntmachung des Hinweises auf die
Patenterteilung:
**19.12.84 Patentblatt 84/51**

(84) Benannte Vertragsstaaten:
**AT CH DE FR GB IT LI NL**

(56) Entgegenhaltungen:
**FR-A- 876 259**
**FR-A-1 559 661**
**US-A-3 229 518**
**US-A-3 366 276**

(73) Patentinhaber: **GANZ MÜSZER MÜVEK**
**Vörös Hadsereg utja 64**
**H-1191 Budapest (HU)**

(72) Erfinder: **Karsai, Henrik**
**Révai Köz 15/d**
**H-1065 Budapest (HU)**
Erfinder: **Valéria, Ambrus, Dr.**
**Varga Jòzsef utca 174**
**H-1162 Budapest (HU)**

(74) Vertreter: **Tischer, Herbert, Dipl.-Ing. et al**
**Patentanwälte Dipl.-Ing. Herbert Tischer Dipl.-
Ing. Wolfgang Kern Albert-Rosshaupter-Strasse
65**
**D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Gerät zur elektronischen, kontinuierlichen Messung der Verdunstung einer freien Wasseroberfläche und der auf diese niedergehenden Niederschlagsmenge, mit einer wassergefüllten Meßwanne, die mit einem wassergefüllten Fühlergefäß vergleichsweise kleinerer Oberfläche in Strömungsverbindung steht, in dem ein Flüssigkeitsstandfühler angeordnet ist, durch dessen Ausgänge über einen Stromkreis eine Nachfülleinheit für verdunstetes Wasser bzw. eine Ablaßeinheit für niedergeschlagenes Wasser ansteuerbar ist, welche Einheiten separat an Zählerkreise angeschlossen sind, von denen wenigstens einer mit einem Registriergerät verbunden ist.

Das bekannte Gerät dieser Art (US—A—3229518) zur Messung des Niederschlags mit Hilfe einer offenen Meßwanne, die dem Regen und Wind ausgesetzt ist, und einem Fühlergefäß, das mit der Meßwanne in Strömungsverbindung steht und die Aufgabe hat, die Füllstandshöhenänderungen in der Meßwanne abzutasten und durch eine mechanische Übersetzung über Maske und Fotodiode zu messen bzw. anzuzeigen, entspricht nicht den gewünschten Genauigkeitsanforderungen. Darüberhinaus kommt hierbei ein Meßprinzip zur Anwendung, gemäß dem die Verdunstung des Flüssigkeitsspiegels in der Messwanne mit Hilfe eines Ölfilms, der sich auf dem Wasserspiegel befindet, verhindert bzw. auf ein Mindestmaß beschränkt werden soll.

Bei der FR—A—876259 läßt die Meßgenauigkeit insofern zu wünschen übrig, als sie nicht den international vereinbarten Regeln entspricht, was bedeutet, daß die Niederschlagsmessung mit einer Genauigkeit von ±0,5 mm und die Verdunstungsmessung mit einer Genauigkeit von ±0,04 mm zu erfolgen hat.

Die US—A—3366276 betrifft ein Meßgerät, bei dem zur Ermittlung der Flüssigkeitsfüllstandhöhe eine Magnet-Reedschalteranordnung verwendet wird, die jedoch keinerlei bezug zu einem Verdunstungs- und Niederschlagsmeßgerät hat.

Die Aufgabe der Erfindung besteht deshalb darin, das Gerät der genannten Art so auszubilden, daß die Messung der Verdunstung und des Niederschlags mit praktisch beliebiger Auflösung erfolgen kann, so daß sie den international geforderten Meßgenauigkeitsanforderungen gerecht wird.

Diese Aufgabe wird erfindungsgemäß dadurch gelöst, daß der Flüssigkeitsstandfühler aus einem Schwimmer und einer Fühlerspule besteht, daß die Strömungsverbindung zwischen der Meßwanne und dem Fühlergefäß ein Rohr geringen Durchmessers ist, daß in der Nachfülleinheit ein Nachfüllrohr an sich beliebigen Durchmessers über ein erstes Ventil an einen Wassertank angeschlossen ist, daß sich an dem Nachfüllrohr zwei einen einstellbaren Abstand voneinander aufweisende Positionsfühler befinden, daß der Auslaßstutzen des Nachfüllrohres über ein zweites Ventil zu dem Fühlergefäß geführt ist, daß in der Ablaßeinheit von dem Fühlergefäß ein Rohr über ein drittes Ventil zu einem Ablaßrohr an sich beliebigen Durchmessers geführt ist, an dem sich zwei einen einstellbaren Abstand voneinander aufweisende Positionsfühler befinden, und daß der Auslaßstutzen des Ablaßrohres über ein viertes Ventil ins Freie führt.

Durch diese Konstruktion wird eine automatische kombinierte und kontinuierliche Messung des Niederschlags und der Verdunstung mit einer Genauigkeit von einigen Tausendstel Millimetern ermöglicht, die damit noch größer ist als die international gesetzte Norm.

Die Unteransprüche befassen sich mit vorteilhaften Ausgestaltungen der Erfindung.

Die Erfindung wird nachfolgend anhand des in der Zeichnung dargestellten Ausführungsbeispiels näher erläutert. In der Zeichnung zeigt:

Fig. 1 eine schematische Darstellung des Meßgerätes,

Fig. 2 ein elektrisches Blockschaltbild des Gerätes von Fig. 1.

An die wassergefüllte Meßwanne 1 schließt sich mit einem Rohr ein wassergefülltes Fühlergefäß 12 an, in dem ein in einer Oszillatorschaltung arbeitender Flüssigkeitsstandfühler 2 und ein Schwimmer 3 mit einer Metallplatte untergebracht sind. Eine mögliche Ausführungsform der Nachfülleinheit bilden die Ventile 4 und 6, das Nachfüllrohr 5, in dem ein Schwimmer mit Dauermagnet angeordnet ist, auf dem zwei als Reedkontakte $\alpha$ und $\beta$ ausgebildete Positionsfühler angeordnet sind, und der Tank 10. Die Ablaßeinheit besteht beispielsweise aus den Ventilen 7 und 9, dem Ablaßrohr 8 mit Magnetschwimmer und Positionsfühler $\gamma$ und $\delta$ und dem Ablaßrohr 11. Bei einer anderen möglichen Ausführungsform der Nachfüll- und Ablaßeinheit können die oben beschriebenen Einheiten durch je eine schrittweise gesteuerte Membranpumpe ersetzt werden.

Bei Verdunstung nähert sich wegen sinkenden Wasserspiegels die am Schwimmer 3 angebrachte Metallplatte dem Flüssigkeitsstandfühler 2 und ändert ihre Empfindlichkeit. Dies beeinflußt die Amplitude des Oszillators, und mit dem so erhaltenen Fehlersignal wird das Ventil 6 gesteuert, welches sich öffnet und Wasser in das Fühlergefäß 12 strömen läßt. Die Oberfläche dieses Gefäßes entspricht etwa 1/30 der Oberfläche der Meßwanne 1, die auch Verdunstungswanne genannt werden könnte, und das Gefäß ist mit dieser Wanne durch ein Rohr geringen Durchmessers, beispielsweise 8 mm verbunden. Das einströmende Wasser hebt im Fühlergefäß 12 den Schwimmer 3, wodurch die Empfindlichkeit der Oszillator- und Fühlerspule in entgegengesetzter Richtung geändert wird. Das auf diese Weise erhaltene Fehlersignal schließt das Ventil 6. Wenn der Wasserspiegel des Fühlergefäßes 12 sich mit dem in der Meßwanne 1 befindlichen ausgleicht, sinkt der Schwimmer 3 wieder, und das Signal des Flüssigkeitsstandfühlers 2 öffnet wieder das Ventil 6. Dieser Vorgang wiederholt sich so lange, bis der Nullpegel nach Ausgleich im Fühlergefäß 12 hergestellt ist.

Wenn dazwischen der Dauermagnet des Schwimmers im Nachfüllrohr 5 den Reedkontakt $\alpha$ erreicht, steuert dieser das Ventil 4. Eine logische Schaltung verriegelt gleichzeitig alle anderen Ventile. So füllt sich das Nachfüllrohr 5, bis der Schwimmer den Reedkontakt $\beta$ erreicht, welcher dann das Ventil 4 schließt. Danach setzt sich das Nachfüllen in kleinen Schritten fort, bis das Nullniveau in der Meßwanne wieder hergestellt ist. Die "kleinen Schritte", die hydraulisch-elektronisch bewirkt werden, könnten auch rein elektronisch erzeugt werden, indem man das Ventil mit einer Kippschaltung steuert.

Der Querschnitt des Nachfüllrohres 5 und der Abstand der Reedkontakte, also Daten, die das Nachfüllquantum definieren, werden so gewählt, daß das Quantum einer zu einigen Tausendstel Millimeter, beispielsweise 5 Tausendstel Millimeter gehörenden Wassermenge entspricht.

Bei Niederschlag hebt sich der Schwimmer 3 über das Nullniveau, und der Flüssigkeitsstandfühler 2 steuert das Ventil 7. Jetzt beginnt das Auffüllen des Ablaßrohres 8 gleichermaßen in kleinen Schritten solange, bis der im Rohr schwimmende Magnet den Reedkontakt $\delta$ schaltet. Dadurch wird das Ventil 9 geöffnet. Gleichzeitig verriegelt eine logische Schaltung die anderen Ventile. Nach dem Entleeren des Ablaßrohres schließt der Reedkontakt $\gamma$ durch den Magnetschwimmer das Ventil 9, und der Prozeß setzt sich fort, bis der Füllstandsfühler den ursprünglichen Nullpegel ermittelt.

Immer wenn das Ventil 4 bzw. 9 betätigt wird, bekommt der Verdunstungs- bzw. Niederschlagszähler-Stromkreis einen Impuls, der die Information nach entsprechender Umformung an einen Punktschreiber weitergibt.

Um zu vermeiden, daß beim Nachfüllen bzw. Ablassen infolge zeitweiligen Überschwingens des Schwimmers 3 das Fehlersignal des Fühlers das Ventil des entgegengesetzten Prozesses ansteuert, also z.B. beim Nachfüllen das Ablassen bewirkt, wird bei jeder Funktion die entgegengesetzte Funktion für eine gewisse Zeit verriegelt.

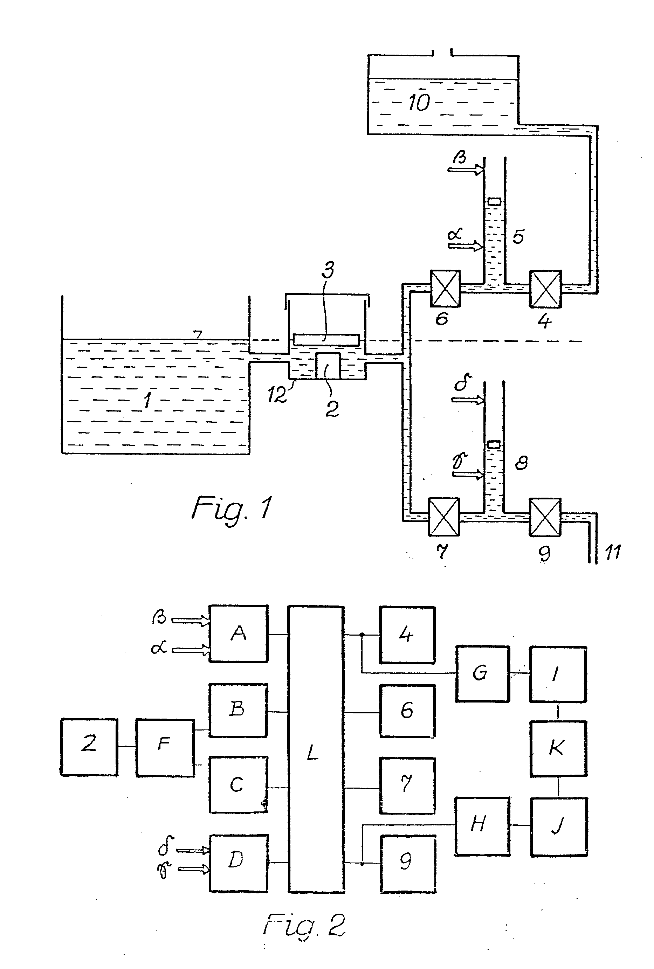

Fig. 2 zeigt das elektrische Blockschaltbild des erfindungsgemäßen Gerätes. Der Fühler 2 ist an den Verstärker F angeschlossen, auf den je ein Schmitt-Trigger-Kreis B bzw. C folgt. An den logischen Stromkreis L schließt sich am Eingang neben B und C je ein bistabiler Flip-Flop A und D an, die von den jeweiligen Reedkontakten des Nachfüll- bzw. Ablaßrohres gesteuert werden. Die Ventile 4, 6, 7 und 9 sind an den Ausgang des logischen Stromkreises L angeschlossen, wie auch die Zählerkreise G und H der verwendeten Ventile 4 bzw. 9, die über die Umformer I bzw. J an gesonderte Eingänge des Registriergerätes K angeschlossen sind. Die Funktion der Stromkreise ist aus der Beschreibung von Fig. 1 eindeutig ersichtlich.

Das Gerät ermöglicht einen kontinuierlichen Betrieb ohne Personal und liefert unmittelbar zur Meßdatenverarbeitung oder Registrierung geeignete elektrische Signale. Die Messung kann praktisch mit beliebiger Auflösung durchgeführt werden, indem man die Geometrie des Nachfüllrohres 5 und des Ablaßrohres 8 entsprechend wählt bzw. bei einer anderen Ausführung die Nachfüll- und Ablaßmengen entsprechend wählt.

Das Messen der Verdunstung und des Niederschlags wird an demselben Ort mit demgleichen Fühler vorgenommen, wodurch die Fehlerkorrektur der bisher verwendeten Methoden wegfällt.

Das Füllstandfühlergefäß ist geschützt und geschlossen, wodurch ein eventueller durch Wellenbildung auf der Wasseroberfläche verursachter Fehler vermieden wird.

Die Montage des Gerätes ist einfach. Das Gerät kann an die typisierten Verdunstungswannen leicht angeschlossen werden, ohne deren ursprünglichen Parameter zu beeinflussen.

**Patentansprüche**

1. Gerät zur elektronischen, kontinuierlichen Messung der Verdunstung einer freien Wasseroberfläche und der auf diese niedergehenden Niederschlagsmenge, mit einer wassergefüllten Meßwanne (1), die mit einem wassergefüllten Fühlergefäß (12) vergleichsweise kleinerer Oberfläche in Strömungsverbindung steht, in dem ein Flüssigkeitsstandfühler (2) angeordnet ist, durch dessen Ausgänge über einen Stromkreis (L) eine Nachfülleinheit (4, A, $\alpha$, $\beta$, 6) für verdunstetes Wasser bzw. eine Ablaßeinheit (7, D, $\gamma$, $\delta$, 9) für niedergeschlagenes Wasser ansteuerbar ist, welche Einheiten separat an Zählerkreise (G, H) angeschlossen sind, von denen wenigstens einer mit einem Registriergerät (K) verbunden ist, dadurch gekennzeichnet, daß der Flüssigkeitsstandfühler (2) aus einem Schwimmer (3) und einer Fühlerspule besteht, daß die Strömungsverbindung zwischen der Meßwanne (1) und dem Fühlergefäß (12) ein Rohr geringen Durchmessers ist, daß in der Nachfülleinheit (4, 5, 6) ein Nachfüllrohr (5) an sich beliebigen Durchmessers über ein erstes Ventil (4) an einen Wassertank (10) angeschlossen ist, daß sich an dem Nachfüllrohr (5) zwei einen einstellbaren Abstand voneinander aufweisende Positionsfühler ($\alpha$, $\beta$) befinden, daß der Auslaßstutzen des Nachfüllrohres (5) über ein zweites Ventil (6) zu dem Fühlergefäß (12) geführt ist, daß in der Ablaßeinheit (7, 8, 9) von dem Fühlergefäß (12) ein Rohr über ein drittes Ventil (7) zu einem Ablaßrohr (8) an sich beliebigen Durchmessers geführt ist, an dem sich zwei einen einstellbaren Abstand voneinander aufweisende Positionsfühler ($\gamma$, $\delta$) befinden, und daß der Auslaßstutzen des Ablaßrohres (8) über ein viertes Ventil (9) ins Freie führt.

2. Gerät nach Anspruch 1, dadurch gekennzeichnet, daß die Nachfülleinheit (4, 5, 6) und die Ablaßeinheit (7, 8, 9) je eine Membranpumpe ist.

3. Gerät nach Anspruch 1 oder 2, dadurch gekennzeichnet, daß der Flüssigkeitsstandfühler (2) an eine Verzögerungsschaltung angeschlossen ist, die die jeweilige entgegengesetzte Funktion, bei der Verdunstungsmessung also die Niederschlagsmessung und bei der Niederschlagsmessung die Verdunstungsmessung, für eine bestimmte Zeitdauer verriegelt.

**Revendications**

1. Appareil pour une mesure électronique continue de l'évaporation d'une surface d'eau libre et de la quantité de condensation arrivant sur celle-ci, comportant un bac de mesure (1) rempli d'eau, qui en liaison d'écoulement avec un récipient de détection (12) rempli d'eau et d'une surface comparativement plus petite, dans lequel est disposé un capteur de niveau de liquide (2), dont les signaux de sortie assurent par l'intermédiaire d'un circuit électrique (L) la commande d'une unité de complément de remplissage (4, A, $\alpha$, $\beta$, 6) pour l'eau évaporée ou bien d'une unité de décharge (7, D, $\gamma$, $\delta$, 9) pour l'eau condensée, lesdites unités étant reliées séparément à des circuits de comptage (G, H) dont au moins un est relié à un appareil enregistreur (K), caractérisé en ce que le capteur de niveau de liquide (2) se compose d'un flotteur (3) et d'une bobine de détection, en ce que la liaison d'écoulement entre le bac de mesure (1) et le récipient de détection (12) est un tube de faible diamètre, en ce que dans l'unité de complément de remplissage (4, 5, 6), un tube de complément de remplissage d'un diamètre quelconque est relié par l'intermédiaire d'une première vanne (4) à un réservoir d'eau (10), en ce qu'il est prévu sur le tube de complément de remplissage (5) deux capteurs de position ($\alpha$, $\beta$) espacés l'un de l'autre d'une distance réglable, en ce que la tubulure de décharge du tube de complément de remplissage (5) est prolongée par l'intermédiaire d'une seconde vanne (6) jusqu'au récipient de détection (12), en ce qu'il est prévu dans l'unité de décharge (7, 8, 9) partant du récipient de détection un tube qui est relié par l'intermédiaire d'une troisième vanne (7) à un tube de décharge (8) d'un diamètre quelconque, sur lequel sont placés deux capteurs de position ($\gamma$, $\delta$) espacés l'un de l'autre d'une distance réglable et en ce que la tubulure de sortie du tube de décharge (8) débouche à l'air libre par l'intermédiaire d'une quatrième vanne (9).

2. Appareil selon la revendication 1, caractérisé en ce que l'unité de complément de remplissage (4, 5, 6) et l'unité de décharge (7, 8, 9) sont chacune une pompe à membrane.

3. Appareil selon la revendication 1 ou 2, caractérisé en ce que le capteur de niveau de liquide (2) est relié à un circuit de retardement qui verrouille pendant une période déterminée à chaque fois la fonction inverse, c'est-à-dire la mesure de condensation lors de la mesure d'évaporation et la mesure d'évaporation lors de la mesure de condensation.

**Claims**

1. Apparatus for the electronical, continuous measurement of the volatilization of an open water surface and of an amount of falling down precipitation by a measuring tank (1) filled with water, which tank is in flow connection with a water containing sensing bottle (12) of comparable minor surface, which bottle includes a sensor (2) for the liquid level having outputs, which can be controlled by a circuit (L) of a refilling unit (4, A, $\alpha$, $\beta$, 6) for vaporized water and a discharge unit (7, D, $\gamma$, $\delta$, 9) for deposited water, respectively, which units are separately connected to a counter circuit (G, H), at least one of which is connected to a recording apparatus (K), characterized in that the liquid level sensor (2) consists of a float (3) and a sensor spool, that the flow connection between the measuring tank (1) and the sensor bottle (12) is a tube of less diameter, that within the refilling unit (4, 5, 6) a refilling tube (5) of any diameter is connected through a first valve (4) to a water tank (10), that the refilling tube (5) is provided with two position sensors ($\alpha$, $\beta$) having an adjustable distance from one another, that the discharge opening of the refilling tube (5) is connected through a second valve (6) to the sensor bottle (12), that within the discharge unit (7, 8, 9) a tube extends from the sensor bottle (12) through a third valve (7) to a discharge tube (8) of any diameter, being provided with two position sensors ($\gamma$, $\delta$) having an adjustable distance from one another and that the discharge opening of the discharge tube (8) extends through a fourth valve (9) into the open air.

2. Apparatus according to claim 1, characterized in that the refilling unit (4, 5, 6) and the discharge unit (7, 8, 9) are diaphragm pumps.

3. Apparatus according to claim 1 or 2, characterized in that the liquid level sensor (2) is connected to a time-lag circuit locking the respective opposite function for a definite time, i.e. in case of measuring the volatilization, the measuring of the water deposite and in case of measuring the water deposite the measuring of the volatilization.

Fig. 1

Fig. 2

1